# EUROPEAN PATENT SPECIFICATION

(11) **EP 3 013 870 B1**
(45) Date of publication and mention of the grant of the patent: **25.10.2023**
(21) Application number: 14731252.4
(22) Date of filing: 17.06.2014
(51) Int. Cl.: C08F 210/16, C08F 4/24, B29D 22/00

(54) **PROCESS FOR MAKING A BLOW MOLDED ARTICLE BASED ON HIGH DENSITY POLYETHYLENE PREPARED WITH TITANATED CHROMIUM-BASED CATALYSTS**
VERFAHREN ZUR HERSTELLUNG EINES BLASGEFORMTER ARTIKELS AUF DER BASIS VON POLYETHYLEN HOHER DICHTE, HERGESTELLT MIT KATALYSATOREN AUF DER BASIS VON TITANIERTEM CHROM
PROCÉDÉ POUR LA PRÉPARATION D'UN ARTICLE MOULÉ PAR SOUFFLAGE À BASE DE POLYÉTHYLÈNE HAUTE DENSITÉ PRÉPARÉ AVEC DES CATALYSEURS À BASE DE CHROME TITANÉ

(30) Priority: 24.06.2013 EP 13173418; 21.01.2014 US 201461929759 P
(43) Date of publication of application: 04.05.2016
(73) Proprietor: Saudi Basic Industries Corporation, 11422 Riyadh (SA); SABIC Global Technologies B.V., 4612 PX Bergen op Zoom (NL)
(72) Inventor: HAMED, Orass, 11422 Riyadh (SA); ALIYEV, Vugar, 11422 Riyadh (SA); BLACKMORE, Ian, 11422 Riyadh (SA); AL-ENAZI, Nayef, 11422 Riyadh (SA)
(74) Representative: Sabic Intellectual Property Group
(86) International application number: PCT/EP2014/062716
(87) International publication number: WO 2014/206816

(56) References cited:
- EP-A1- 0 882 740
- EP-A1- 1 845 110
- WO-A1-2013/186025
- WO-A2-2008/045171
- US-A- 5 115 053
- US-A1- 2009 163 681
- KURELEC L ET AL: "Strain hardening modulus as a measure of environmental stress crack resistance of high density polyethylene", POLYMER, ELSEVIER SCIENCE PUBLISHERS B.V, GB, vol. 46, no. 17, 8 August 2005 (2005-08-08), pages 6369-6379, XP027727255, ISSN: 0032-3861 [retrieved on 2005-08-08]

## Description

The invention is directed to a process for making a blow molded article prepared using a product obtained with a process for the production of polyethylene by gas phase polymerisation of ethylene in the presence of a chromium oxide based catalyst.

The production processes of LDPE, HDPE and LLDPE are summarised in "Handbook of Polyethylene" by Andrew Peacock (2000; Dekker; ISBN 0824795466) at pages 43-66. The catalysts can be divided in three different subclasses including Ziegler Natta catalysts, Phillips catalysts and single site catalysts. The various processes may be divided into solution polymerisation processes employing homogeneous (soluble) catalysts and processes employing supported (heterogeneous) catalysts. The latter processes include both slurry and gas phase processes.

The chromium oxide based catalyst, which is commonly referred to in the literature as "the Phillips catalyst", can be obtained by calcining a chromium compound carried on an inorganic oxide carrier in a non-reducing atmosphere. The chromium oxide catalysis and the ethylene polymerisation with this specific catalyst are disclosed in "Handbook of Polyethylene" by Andrew Peacock at pages 61-64.

Polyethylene is suitable to be applied in the production of blow moulded articles via the so-called "blow moulding technique". In fabricating blow moulded articles, for example milk bottles, a balance between the physical properties and the processing properties of the polymer, for example polyethylene, must be present. Because of the physical properties of the manufactured blow molded article, the density of the polymer from which the blow molded article is manufactured has to be as high as possible because a high density results in a high rigidity of the blow molded article to make it possible to produce, for example, a bottle, being resistant to deformation. Due to the higher rigidity it is possible to obtain a blow molded article having the desired requirements and additionally having thinner walls so that savings in the consumption of (poly)ethylene are achieved. Because of the processing properties the polymer must have good flow properties. The higher the flow of the polymer, the faster the blow molded articles may be produced.
US 5115053 A concerns a polyethylene that can be used for blow molded articles. US 5115053 A is directed to a slurry polymerisation process.
EP 1845110 A concerns a polyethylene that can be used for blow molded articles. EP 1845110 A is directed to a gas polymerisation process with a surface area of the catalyst support of between 250 and 400 m²/gram.

Very important are the mechanical properties of the polymer by means of Environmental Stress Crack Resistance (ESCR). As disclosed in "Handbook of Polyethylene, structure, properties and applications "(by Andrew Peacock, Dekker, New York, 2000; pages 124-170) high density polyethylene (homopolymer and copolymer) is rather tough at room temperature. However, due to its viscoelastic nature, a high density polyethylene (HDPE) blow molded article loses shape stability when subjected to prolonged stress. This is the case even when the applied stress is much lower than the stress required to induce plastic deformation (yield stress, σ_{y}). Mechanical instability can manifest itself in the form of creep, stress relaxation, crazing and/or environmental stress cracking. All these long-term instabilities involve gradual rearrangement of molecules either on a local level (in the case of brittle failure and stress cracking) or throughout a large portion of the sample (as in creep and stress relaxation). When exposed to stresses of less than one half the yield stress and if bulk inhomogeneity is present, brittle failure (no macroscopic orientation prior to failure) occurs by slow crack growth. The crack is initiated at an existing stress concentration point (bulk inhomogeneity) such as for example a sharp notch or a scratch. The resistance offered by a polymer to fracture in a certain environment and at a certain stress is an important resin property and referred to as ESCR. ESCR is the accepted criterion of long-term durability of HOPE products (notably blow moulding items and pipes) exposed to elevated pressure and temperature, chemicals and/or stresses. ESCR may be measured by an accelerated testing method which measures the time needed for a notched material to fail under slow crack propagation conditions (low applied stress) at elevated temperatures and in the presence of a surfactant without changing the failure mechanism. Slow crack propagation in ethylene based polymers proceeds via crazing. A pre-crack (scratch or notch) leads to stress concentration, which results in the formation of the deformation zone (or yield zone). This zone consists of miniscule cavities (voids), which will grow and join up to form an essentially fibrillar structure usually referred to as craze. The fibrils within a craze will extend over time until a failure criterion is satisfied and consequently the material will fail. This process of fibrillar extension and subsequent weakening is generally accepted to be a rate-determining step controlling the overall slow crack propagation in polyethylene. This step is governed by the disentanglement process of (tie) molecules. The more tie molecules present, the more stress can be supported and consequently the higher the resistance against a chain detaching from a crystal. On the other hand, the ability of releasing a chain from a crystal will also highly depend on crystal strength, which is determined by the crystal's perfection and thickness. Given this slow crack propagation mechanism in polyethylene, the molecular parameters leading to high ESCR are the same parameters which will lead to an increased number of tie molecules. On the other hand it is desirable that the finished blow molded articles also retain desirable stiffness, which is predominantly determined by crystallinity and/or crystal size. The two requirements for the desired molecular structure (high crystallinity and a large number of tie molecules) are conflicting as the formation of an increased number of tie molecules will result in lower crystallinity (i.e. lower stiffness). Polyethylene having a lower density possesses a higher ESCR. The density of polyethylene may be controlled by the addition of an α-olefine, which leads to blow molded articles possessing short chain branching. The incorporation of short chain branches will enhance ESCR by forcing molecules to crystallize in different lamellar crystals and consequently leads to an increased number of tie molecules. This is especially the case if short chain branches are predominantly incorporated in the long molecular chains. When for example HDPE is produced in a single reactor system with a heterogeneous catalyst system, such as for example a chromium-containing or a Ziegler Natta system, the comonomers may be incorporated in the low molar mass tail and their amount will decrease with increasing molar mass values. This heterogeneous comonomer distribution with respect to molar mass distribution is not favourable for high ESCR and high stiffness. A highly branched low molar mass tail will not effectively contribute to the formation of effective tie molecules but at the same time it will lead to a dramatic decrease in density and therefore in the resulting stiffness. Highly linear long chains will form tie molecules, which will not be as effective as those containing branches, as the slip through the crystal will be much more facilitated. On being extruded through the die, the polymer melts exhibit so-called die swell. This phenomenon is a drawback during processing, for example during blow moulding of for example thin bottles and/or containers. Therefore an easily processable polymer also exhibits low die swell. More than 65% of the blow moulding market utilizes HDPE obtained by a process using a chromium catalyst and the problem of these grades during processing is their relatively high die swell. This is due to their enhanced melt elasticity, which results from molecular as well as rheological broadness, the latter being a consequence of the ability of a chromium-containing catalyst to develop the low degree of long chain branching.

The strain hardening modulus is a measure of environmental stress crack resistance of high density polyethylene. The strain hardening modulus of polyethylene was measured by the method as described by Kurelec in Elsevier, Polymer 46 (2005) p. 6369-6379.

It is the object of the present invention to provide a process for making a blow molded article prepared using a polyethylene having the desired ESCR or strain hardening modulus values to be applied in the production of bottles.

The present invention relates to a process for making a blow molded article prepared using a product obtained with a process for the production of polyethylene by gas phase polymerization of ethylene in the presence of a catalyst composition comprising a porous silicon oxide support material carrying a chromium compound and a transition metal containing compound or metal halide transition metal compound wherein the silicon oxide support material has an average particle size between 20 µm and 40 µm, a pore volume between 1.8 and 2.2 ml/g and a surface area between 480 and 545 m² / g and wherein the preparation of the catalyst composition comprises the step of adding the chromium salt to the silica support in methanol or ethanol, then mixing and drying the slurry, wherein the catalyst composition does not comprise a magnesium containing compound.

A suitable pore diameter for the silica used may be for example about 146 Angstrom as an average to the size of the opening of the pore.

The blow molded article prepared using a product obtained with a process according to the present invention has improved mechanical properties especially the ESCR/ strain hardening modulus. This improvement results in excellent bottles suitable to be used as a container for detergents, chloric, bleaches and liquid soap were these chemicals known to have a damaging corrosive effect on plastics.

The blow molded article prepared using a product obtained with a process according to the present invention has improved morphology, improved bulk density, less fines and improvement in C₆ co-monomer incorporation.

For the production of bottles for foodstuffs, for example milk, there exist requirements with respect to smell and/or taste. The blow molded article prepared using a product obtained with a process according to the invention does not adversely influence the taste and smell.

In the catalyst composition the chromium compound which is activated in the calciner to turn into CrO₃ "active sites" for ethylene polymerization is the precursor. The chromium compound can be selected from various organic and inorganic forms of chromium. Preferably the chromium compound is selected from chromium acetate, chromium acetyl acetonate, chromium acetate hydroxide and chromium trioxide. Most preferably chromium acetate or chromium acetyl acetonate is applied.

According to a preferred embodiment of the invention the average particle size ranges between 25 µm and 35 µm.

According to a further preferred embodiment of the invention the surface area ranges between 480 and 525 m²/g.

According to a preferred embodiment of the invention the transition metal compound or metal halide transition metal compound has the general formula Tₘ (OR¹)ₙX₄₋ₙ and Tₘ(R²)ₙX₄₋ₙ, wherein
- Tₘ represents a transition metal of Group IVB, VB, or VIB,
- R¹ and R² represent an (C₁-C₂₀) alkyl group, (C₁-C₂₀) aryl group or (C₁-C₂₀) cycloalkyl group,
- X represents a halogen atom and
- n represents a number satisfying 0 ≥ n ≤ 4.

The transition metal may be titanium, vanadium, hafnium or zirconium.

According to a preferred embodiment of the invention the metal is titanium.

Suitable examples of R¹ include (C₁-C₂₀) alkyl groups for example methyl, ethyl, n-propyl, isopropyl and n-butyl groups.

Preferably the halogen atom is chlorine.

Preferably the transition metal compound or metal halide transition metal compound has the formula Tₘ(OR¹)ₙX₄₋ₙ

Examples of suitable titanium compounds having the general formula Tₘ (OR¹)ₙX₄₋ₙ and Tₘ(R²)ₙX₄₋ₙ include titanium alkoxy compounds for example tetraethoxy titanium, tetramethoxy titanium, tetrabutoxy titanium, tetrapropoxy titanium, tetraisobutoxy titanium, tetrapentoxy titanium, triethoxychloro titanium, diethoxydichloro titanium , trichloethoxy titanium, methoxy titanium trichloride, dimethoxy titanium dichloride, ethoxy titanium trichloride, diethoxy titanium dichloride, propoxy titanium trichloride, dipropoxy titanium dichloride, butoxy titanium trichloride, butoxy titanium dichloride, titanium tetrachloride, vanadium trichloride, vanadium tetrachloride, vanadium oxytrichloride, zirconium tetrachloride and/or vanadium tetrachloride .

The amount of chromium in the final catalyst is less than 0.5 % by weight. More preferably the amount of chromium in the final catalyst ranges between 0.1 and 0.4 % by weight.

The metal content, preferably the titanium content, of the catalyst ranges between 3.0 and 4.0 % by weight.

The catalyst composition may also comprise an organoaluminium containing compound.

The blow molded article prepared using a product obtained with a process according to the invention may be applied for ethylene gas phase polymerization to medium and high density polyethylene and copolymers of ethylene with alpha-olefins having about 3 to 18 carbon atoms.

According to a preferred embodiment of the invention the comonomer is 1-hexene.

The produced polyethylene may be HDPE and LLDPE.

A gas phase reactor is essentially a fluidized bed of dry polymer particles maintained either by stirring or by passing gas (ethylene) at high speeds through it. The obtained powder is mixed with stabilizers and generally extruded into pellets. Gas fluidized bed polymerisation processes are summarised by Than Chee Mun in Hydrocarbons 2003 "Production of polyethylene using gas fluidised bed reactor". Gas phase polymerisation generally involves adding gaseous monomers into a vertically oriented polymerisation reactor filled with previously formed polymer, catalyst particles and additives. Generally the polymerisation in the gas phase polymerisation systems takes place at temperatures between 30°C and 130°C with super atmospheric pressures. The rising gas phase fluidizes the bed, and the monomers contained in the gas phase polymerize onto supported catalyst or preformed polymer during this process. Upon reaching the top of the reactor, unreacted monomer is recycled, while polymer continually falls down along the sides of the reactor. Examples of suitable gas phase polymerisations are disclosed in for example US-A- 4003712 and US-A- 2005/0137364.

The catalyst composition comprising the porous silica support material carrying a chromium salt and the transition metal containing compound or metal halide transition metal compound may be prepared by adding the chromium salt to the silica support in a suitable solvent like methanol or ethanol then the slurry is mixed and dried at about for example 85°C.

The polyethylene powder obtained with the catalyst composition and used in the preparation of a blow molded article according to the present invention has:
- a resin bulk density ≥ 350 kg/m³ and ≤ 450kg/m³ ( according to ISO1183).
- a fluidised bulk density ≥ 270 kg/m³ and ≤ 350kg/m³ (according to ISO1183). The ESCR ranges between 18 and 20 MPa (according to Neo Hookean fit).

According to a preferred embodiment of the invention the polyethylene powder obtained with the catalyst composition and used in the preparation of a blow molded article according to the present invention has:
- a resin bulk density ≥ 395 kg/m³ and ≤ 450kg/m³ ( according to ISO1183).
- an upper fluidised bulk density ≥ 285 kg/m³ and ≤ 350kg/m³ ( according to ISO1183).

The obtained polyethylene is suitable to be applied in the production of large-part blow molded articles and especially for milk bottles and house industrial containers.

The ethylene polymers obtained with the process and used in the preparation of a blow molded article according to the invention may be combined with additives such as for example lubricants, fillers, stabilisers, antioxidants, compatibilizers and pigments. The additives used to stabilize the polymers may be, for example, additive packages including hindered phenols, phosphites, UV stabilisers, antistatics and stearates.

WO 2008/045171 A2 discloses a supported olefin polymerization catalyst having a silica surface area ranging between 264 m²/g up to 336 m²/g whereas the surface area of the silica in the present invention ranges between 400 and 600 m²/ g.

US 5115053 discloses a silica support having am average particle size in the range between 70 and 90 µm. Because of the narrow control on average particle size and morphology the present invention is able to produce upper fluidized bulk density > 280 kg/m³ in fluidized gas phase reactor which does not correlate with the slurry loop process as applied in US 5115053.

The invention will be elucidated by means of the following nonlimiting examples.

### Examples

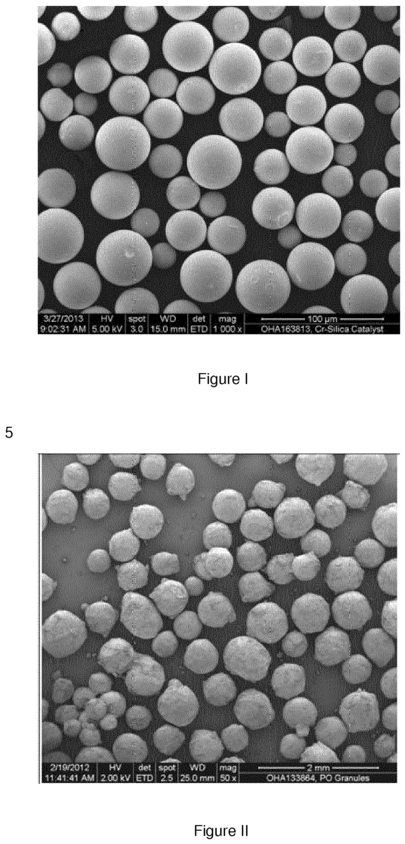

The properties of the polymers produced in the Examples were determined as follows:
- The polymer density (kg/m³) was determined as specified in ASTM D 1505-68.
- Polymer molecular weight and its distribution (MWD) were determined by Polymer Labs 220 gel permeation chromatograph. The chromatograms were run at 150 °C using 1,2,4-trichlorobenzene as the solvent with a flow rate of 0.9 ml / min. The refractive index detector is used to collect the signal for molecular weights. The software used is Cirrus from PolyLab for molecular weights from Gel Permeation Chromatography (GPC). The calibration of the HT-GPC uses a Hamielec type calibration with broad standard and fresh calibration with each sample set.
- The specific surface area is determined using the so-called BET method and the pore volume is determined with nitrogen cappilary condensation. (Recommendations IUPAC 1991; Pure and App. Chem., Vol. 63, 9, 1227-1246.)
- The strain hardening modulus is a measure of environmental stress crack resistance of high density polyethylene. The strain hardening modulus of polyethylene was measured by the method as described by Kurelec et al.in Elsevier, Polymer 46 (2005) p. 6369-6379. ESCR measurements by testing specimen in a nonionic surfactant environment at elevated temperatures until failure is a test method which is accepted by the blow moulding market for decades. Main disadvantages of this method are the long time before failures occurs and the relative high deviation in reproducibility. A more elegant test method which overcomes these disadvantages is the ESCR method according to a standard tensile test in which the strain hardening modulus is calculated from the true-stress true-strain (TS-TS) curve. The strain hardening modulus is an intrinsic material property in which no surfactant is needed for accelerated failure times. It has been proven by L.Kurelec et al in said article that the strain hardening modulus perfectly correlates with the ESCR data as obtained by the surfactant environment method. In Table 2 (p. 6375) the ESCR and strain hardening modulus (< Gp>) data of some Cr HDPE grades and bimodal HDPE grades (both with C₄ and C₆ as co-monomers) are collected and plotted against each other (Figure 10, p. 6377). It shows a very well correlation (Rsquare=0.90) in a strain hardening modulus range between 10 and 35 MPa. The test method as described can easily be carried out by any person skilled in the art. The sample preparation and the measurements are described in Chapters 2.3.1.and 2.3.2. The observed correlation (Figure 10) is based on tensile measurements at T=80°C. The strain hardening modulus < Gp> can be calculated as given in Chapter 2.3.3. (data treatment) of the article.

### Example I

To a three-necked round bottom flask, equipped with a condenser and a mechanical stirrer 30g of dried silica (M-203-F silica support) with 0.5 % Cr average particle size of 35 micrometres, a surface area (SA) of 519 m² / g and a pore volume (PV) of 1.9 ml/g at 200°C is placed into the flask then 0.57 g of Chromium acetate hydroxide were added to the silica then slurried in 250 cm³ of Methanol (100%), which was stirred at 70°C for 60 minutes. After wards drying ethanol solvent took place at 85°C with nitrogen purge. The dried chromium salt on silica powder was cooled down to room temperature then slurried with 250cm³ of iso-pentane, to be followed by the addition of 8.6 cm³ of 100% Ti(OC₂H₅)₄ (tetra ethoxy titanium) which was allowed to mix for 30 minutes at 45°C then drying the solvent at 75°C with nitrogen purge. For the chrome catalyst activation the dried catalyst powder was placed in the calciner and the following sequence was followed:
- Ramp from ambient to 150°C in 3 hours under N₂ flow then hold for 10 minutes
- Ramp from 150°C to 450°C in 3 hours
- At 450°C switch from N₂ to O₂ flow
- Ramp from 450°C to 750°C in 3 hours under O₂
- Hold at 750°C for 3 hours
- Cool to room temperature then switch to N2 purge.

Elemental analysis: 0.35 wt% Cr and 4.1 wt% Ti
Figure I shows the catalyst from Example I.

### Comparative Example A

### Synthesis of catalyst composition

To a three-necked round bottom flask, equipped with a condenser and a mechanical stirrer 30g of dried silica with 0.5 % Cr average particle size of 45 micrometres, a pore volume (PV) of 1.5 ml/g and a surface area (SA) of 310 m² / g at 200°C slurried with 250cm³ of iso-pentane, to be followed by the addition of 6.8 cm³ of tetraethoxy titanium Ti(OC₂H₅)₄ (100%). The contents were mixed at 35°C for another 60 minutes followed by drying the solvent at 85°C with nitrogen purge. For the chrome catalyst activation the dried catalyst powder was placed in the calciner and was activated in air at 800 °C for 4 hours.

Elemental analysis: 0.38 wt% Cr and 3.8 wt% Ti.

### Example II

### Ethylene polymerization

An autoclave with a volume of 2 liters was purged with nitrogen at 130°C for 30 minutes. After cooling the autoclave to 70°C, one liter of iso-pentane and 10 ml of 1-hexene were introduced to the reactor. The reactor was pressurized with 15 bar ethylene. Then 0.1 mmol of TEAL was injected into the reactor by the means of a catalyst injection pump. This was followed by injection of 0.15 g of catalyst composition according to Example I after being slurried in 20 cm³ of iso-pentane solvent. The reactor temperature was raised to 106°C. Ethylene polymerization was carried out for 60 minutes; with ethylene supplied on demand to maintain the total reactor pressure at 20 bar. 388 litres of ethylene were consumed and 363 grams of polyethylene were recovered giving a catalyst productivity of 2,420 g PE/g cat h at 200 psig.

The characteristics of the obtained polyethylene:
- Weight average molecular weight: 198,788
- Number average molecular weight: 16,502
- Molecular weight distribution: 12
- Polymer density: 956 kg/m³
- Resin bulk density: 401 kg/m³.
- Fines level was measured at 0.17 %.

### Comparative Example B

### Ethylene polymerization

An autoclave with a volume of 2 litres was purged with nitrogen at 130°C for 30 minutes. After cooling the autoclave to 70°C, one litre of iso-pentane and 10 ml of 1-hexene were introduced to the reactor. The reactor was pressurized with 15 bar ethylene.

Then 0.1 mmol of TEAL was injected into the reactor by the means of a catalyst injection pump. This was followed by injection of 0.15 g of catalyst composition according to Comparative Example A after being slurried in 20 cm³ of iso-pentane solvent. The reactor temperature was raised to 101°C. Ethylene polymerization was carried out for 60 minutes; with ethylene supplied on demand to maintain the total reactor pressure at 20 bar.

329 litres of ethylene were consumed and 318 grams of polyethylene was recovered giving a catalyst productivity of 2,120 g PE/g cat h at 200 psig.

The characteristics of the obtained polyethylene:
- Weight average molecular weight: 177,788
- Number average molecular weight: 15,878
- Molecular weight distribution: 11.1
- Polymer density: 958 kg/m³
- Resin bulk density: 350 kg/m³.
- Fines level was measured at 1.17 %.

The results from Example II in comparison to Example B show better productivity and resin bulk density because of the use of the catalyst prepared in Example I.

### Example III

### Ethylene gas phase polymerization

Ethylene was polymerised in the presence of the catalyst according to Example I via a gas phase polymerisation with reactor pressure: 20.7 bar, bed temperature 108°C, bed weight 55 kg; C₂ partial pressure: 15 bar; C₆/C₂ ratio 0.0008; H₂/C₂ ratio 0.16 and super gas velocity (S.G.V) 0.44 m/sec.

The production rate was 12 kg/h and the catalyst productivity 10,000 kg/kg

The characteristics of the obtained polyethylene:
- Upper fluidized Bulk Density: 299 kg/m³
- Resin Bulk Density: 420 kg/m³
- HLMI: 21
- Polymer Density: 952 kg/m³
- Stress at Yield: 10.5MPa
- Strain hardening modulus: 18.2 MPa
- Ash: 80 ppm

Figure II shows the HOPE from Example III.

### Comparative Example C

### Ethylene gas phase polymerization

Ethylene was polymerised in the presence of the catalyst according to Comparative Example A via a gas phase polymerisation with reactor pressure: 20.7 bar, bed temperature 108°C, bed weight 51 kg; C₂ partial pressure: 15 bar; C₆/C₂ ratio 0.00125; H₂/C₂ ratio 0.16 and S.G.V 0.41 m/sec

The production rate was 10.5 kg/h and the catalyst productivity 10,000 kg/kg

The characteristics of the obtained polyethylene:
- Upper Fluidized Bulk Density: 259 kg/m³
- Resin Bulk Density: 388 kg/m³
- HLMI: 27
- Polymer Density: 954 kg/m³
- Stress at Yield: 8.1 MPa
- Strain hardening modulus: 11.8 MPa
- Ash: 80 ppm

When comparing Example III and Comparative Example C we note that the catalyst system according to Example I produces a resin of increased bulk density, accordingly bed weight in the reactor was increased (from 51 kg up to 55 kg) which causes an increase in the drop size, eventually increasing the production rate which is very significant for gas phase polymerisation.

The strain hardening modulus according to Example III is improved in comparison with strain hardening modulus according to Comparative Example C.

C₆/C₂ was increased to 0.00125 to produce a density of 954 kg/m³ and only 0.0008 C₆/C₂ ratio was used to produce a density of 953 kg/m³

## Claims

1. Process for making a blow molded article prepared using the product obtained with a polymerization process for the production of polyethylene by gas phase polymerization of ethylene in the presence of a catalyst composition comprising a porous silicon oxide support material carrying a chromium compound and a transition metal containing compound or metal halide transition metal compound wherein the silicon oxide support material has an average particle size between 20 µm and 40 µm, a pore volume between 1.8 and 2.2 ml/g and a surface area
between 480 and 545 m² / g and
wherein the preparation of the catalyst composition comprises the step of adding the chromium salt to the silica support in methanol or ethanol, then mixing and drying the slurry,
wherein the catalyst composition does not comprise a magnesium containing compound.

2. A process according to Claim 1 **characterized in that** the average particle size ranges between 25 µm and 35 µm.

3. A process according to any one of Claims 1-2 **characterized in that** the metal compound is a titanium compound.

4. A process according to any one of Claims 1-3 **characterized in that** the chromium compound is selected from chromium acetate, chromium acetyl acetonate, chromium acetate hydroxide and chromium trioxide.

5. A process according to any one of Claims 1-4 **characterised in that** the amount of chromium in the catalyst is less than 0.5 % by weight.

6. A process according to any one of Claims 1-5 **characterised in that** the metal content, preferably the titanium content, of the catalyst ranges between 3.0 and 4.0 % by weight.

## Patentansprüche

1. Verfahren zum Herstellen eines blasgeformten Gegenstandes, der unter Verwendung des Produkts hergestellt wird, das erhalten wird mit einem Polymerisationsverfahren zur Herstellung von Polyethylen durch Gasphasenpolymerisation von Ethylen in Gegenwart einer Katalysatorzusammensetzung umfassend ein poröses Siliciumoxid-Trägermaterial, das eine Chromverbindung und eine Übergangsmetall enthaltende Verbindung oder eine Metallhalogenid-ÜbergangsmetallVerbindung trägt, wobei das Siliciumoxid-Trägermaterial eine durchschnittliche Partikelgröße zwischen 20 µm und 40 µm, ein Porenvolumen zwischen 1,8 und 2,2 ml/g und eine Oberfläche zwischen 480 und 545 m²/g aufweist, und
wobei die Zubereitung der Katalysatorzusammensetzung den Schritt des Zugebens des Chromsalzes zu dem Siliciumoxid-Träger in Methanol oder Ethanol, anschließendes Mischen und Trocknen der Schlämme umfasst,
wobei die Katalysatorzusammensetzung keine magnesiumhaltige Verbindung umfasst.

2. Verfahren nach Anspruch 1, **dadurch gekennzeichnet, dass** die durchschnittliche Partikelgröße im Bereich zwischen 25 µm und 35 µm liegt.

3. Verfahren nach einem der Ansprüche 1-2, **dadurch gekennzeichnet, dass** es sich bei der Metallverbindung um eine Titanverbindung handelt.

4. Verfahren nach einem der Ansprüche 1-3, **dadurch gekennzeichnet, dass** die Chromverbindung aus Chromacetat, Chromacetylacetonat, Chromacetathydroxid und Chromtrioxid ausgewählt ist.

5. Verfahren nach einem der Ansprüche 1-4 **dadurch gekennzeichnet, dass** die Menge an Chrom in dem Katalysator weniger als 0,5 Gewichtsprozent beträgt.

6. Verfahren nach einem der Ansprüche 1-5, **dadurch gekennzeichnet, dass** der Metallgehalt, vorzugsweise derTitangehalt, des Katalysators im Bereich zwischen 3,0 und 4,0 Gewichtsprozent liegt.

## Revendications

1. Procédé de fabrication d'un article moulé par soufflage préparé en utilisant le produit obtenu par un procédé de polymérisation pour la production de polyéthylène par polymérisation en phase gazeuse de l'éthylène en présence d'une composition de catalyseur comprenant un matériau support d'oxyde de silicium poreux portant un composé de chrome et un composé contenant un métal de transition ou composé de métal de transition et d'halogénure métallique dans lequel le matériau support d'oxyde de silicium a une taille moyenne de particules comprise entre 20 µm et 40 µm, un volume de pores compris entre 1,8 et 2,2 ml/g et une surface spécifique comprise entre 480 et 545 m²/g et
dans lequel la préparation de la composition de catalyseur comprend l'étape d'ajout du sel de chrome au support de silice dans du méthanol ou de l'éthanol, puis de mélange et de séchage de la suspension,
dans lequel la composition de catalyseur ne comprend pas de composé contenant du magnésium.

2. Procédé selon la revendication 1 **caractérisé en ce que** la taille moyenne de particules est comprise entre 25 µm et 35 µm.

3. Procédé selon l'une quelconque des revendications 1 et 2, **caractérisé en ce que** le composé métallique est un composé de titane.

4. Procédé selon l'une quelconque des revendications 1 à 3, **caractérisé en ce que** le composé de chrome est choisi parmi l'acétate de chrome, l'acétylacétonate de chrome, l'hydroxyde d'acétate de chrome et le trioxyde de chrome.

5. Procédé selon l'une quelconque des revendications 1 à 4, **caractérisé en ce que** la quantité de chrome dans le catalyseur est inférieure à 0,5% en poids.

6. Procédé selon l'une quelconque des revendications 1 à 5, **caractérisé en ce que** la teneur en métal, de préférence la teneur en titane, du catalyseur est comprise entre 3,0 et 4,0% en poids.
